# EUROPEAN PATENT APPLICATION

(11) **EP 2 852 124 A1**
(43) Date of publication of application: **25.03.2015**
(21) Application number: 13883851.1
(22) Date of filing: 12.08.2013
(51) Int. Cl.: H04L 29/08, H04L 29/06

(54) **RESOURCE DEPLOYMENT METHOD FOR CLOUD COMPUTING ENVIRONMENT**

(30) Priority: 09.07.2013 CN 201302881131
(71) Applicant: G-Cloud Technology Ltd, SongShan Lake Technology Industrial Zone DongGuan Guangdong 523808 (CN)
(72) Inventor: MA, Guicheng, Dongguan Guangdong 523808 (CN); YANG, Song, Dongguan Guangdong 523808 (CN); MO, Zhanpeng, Dongguan Guangdong 523808 (CN); JI, Tongkai, Dongguan Guangdong 523808 (CN)
(74) Representative: Hocking, Adrian Niall
(86) International application number: PCT/CN2013/081306
(87) International publication number: WO 2015/003420

(57) **Abstract**

In the field of network resource deployment technology, a method for deploying resource in a cloud computing environment comprises steps of: installing a distributed communication module and a resource deployment module on each one of a plurality of nodes; via a first resource deployment module on a first node of the plurality of nodes, sending a request for resource deployment to other nodes by a user; and transmitting the resource among the distributed communication module; if a first distributed communication module on the first node detects a destination that comprises the first resource deployment module, sending the request to the first resource deployment module on the first node; deploying the resource by the first resource deployment module. The method for deploying resource in the cloud computing environment solves problems of excessive connection of point-to-point deployment, complicated management and repetitive work caused by not capable of deploying multiple targets and etc., and is suitable for deploying the resource in the cloud computing.

## Description

### Field of Invention

The present invention relates to the field of network resource deployment technology, and more particularly to a method for deploying resource in a cloud computing environment.

### Description of Related Arts

With the rapid development of cloud computing technology, the demand of users for service is increasingly high. Multiple companies or governments deploy a plurality of servers to provide services. The number of nodes of the servers of the companies or governments is over 100. If the conventional point-to-point deployment is adopted for managing resource deployment with such large scaled nodes, it will not only be a nightmare for the maintainers but also cause problems as follows.
(1) The huge number of the nodes leads to a complicated management. Excessive number of connections leads to a complicated resource deployment. When the IP of one node changes, multiple nodes need re-connecting.
(2) The resource deployment is repetitive and not capable of being accomplished once for all.
(3) The cross-segment resource deployment requires frequently changing configuration of routers.

Under circumstances of large scaled nodes, a simple, fast and one-time method for deploying resource is capable of greatly relieving the stress of the maintainers and reducing utilizing difficulties of ordinary users. In order to reduce the work of the resource deployment, it is necessary to provide a fast method for deploying resource in distributed environment.

### Summary of the Present Invention

Accordingly, the present invention provides a fast method for deploying resource in a cloud computing environment, so as to solve the technical problems of slow point-to-point resource deployment and etc.

In order to solve the technical problems mentioned above, technical solutions provided by the present invention.

A method for deploying resource in a cloud computing environment comprises steps of:
step 1: installing a distributed communication module and a resource deployment module on each one of a plurality of nodes;
step 2: via a first resource deployment module on a first node of the plurality of nodes, sending a request for resource deployment to other nodes by a user;
step 3: when a first distributed communication module on the first node detects a destination that comprises the first resource deployment module, sending the request to the first resource deployment module on the first node by the first distributed communication module; continually transmitting resource among the distributed communication modules when other destinations are detected;
step 4: deploying the resource by the first resource deployment;
step 5: terminating deploying the resource.

Preferably, each distributed communication module is capable of serving as not only a server terminal but also a client terminal; and the first distributed communication module on the first node is connected with a distributed communication module on a closest node.

Preferably, the first resource deployment module reads a name on a corresponding configuration file and registers the name to the corresponding first distributed communication module, then the first distributed communication module updates a routing table; wherein each resource deployment module has a different name, so as to uniquely represent the resource deployment modules on different nodes.

The transmitting resource among the distributed communication modules preferably comprises steps of:
step I: sending the request for resource deployment by the resource deployment module on any one of the nodes to the distributed communication module on the same node;
step II: looking up a routing table by the distributed communication module of step I; if the distributed communication module finds that a receiver comprises the resource deployment module of step I, carry out step III, otherwise carry out step IV;
step III: transmitting a resource to the resource deployment module of step I by the distributed communication module of step I; deleting a name of the resource deployment module of step I by a destination of the request for the resource deployment; and deploying the resource by the resource deployment module of step I; and
step IV: if the request for the resource deployment has other destinations, looking up the routing table of the receiver by the distributed communication module of step I to obtain connections to a next distributed communication module, and sending the request for the resource deployment to the next distributed communication module.

The step of updating the routing table preferably comprises steps of:
step A: receiving a registering request from the first resource deployment module serving as a client terminal by the first distributed communication module, obtaining the name registered, and setting a communication distance to be 1;
step B: if a next distributed communication module exists, informing the next distributed communication module;
step C: receiving a registering notification from a new client terminal by the next distributed communication module, adding 1 to the communication distance; judging whether the registered name exists, if no, carry out step D; if yes, carry out step E;
step D: directly carrying out the step B according to the name of the client terminal newly added to the routing table, records of connections of the previous distributed communication module and communication distances;
step E: if the registered name exists, comparing the previous communication distance with a current communication distance; if the current communication distance is shorter, carry out a step F, otherwise carry out the step B;
step F: updating a connection of the distributed communication module corresponding to the name of the client terminal recorded in the routing table as the previous distributed communication module and a latest communication distance.

The method for deploying resource in the cloud computing environment of the present invention is capable of deploying a virtual machine image, node controller, monitoring agents, serial communication facility and logical volume controller from a resource deployment software nameA on node A to the nodes B, C and D on a subnet 1 and the node E on a subnet 2. Users only have to fill destination names of nameB, nameC, nameD and name E in the resource deployment software nameA and send a request, in such a manner that a simple, fast and one-time request for deploying resource is achieved. Since the distributed communication module is not based on a specific operating system but socket communication, the distributed communication module is capable of deploying the resource to different operating system. Utilizing the method for deploying resource of the present invention, in order to establish a distributed communication environment among N nodes, at least N-1 connections are required for communicating with each other, which is similar to N points on a straight line. Of course, more connections can be established, and a number of the connections is determined according to specific deployment circumstance.

### Brief Description of the Drawings

Further description of the present invention is illustrated combining with the accompanying drawings.
Fig. 1 is a flow chart of a fast method for deploying resource of the present invention.
Fig. 2 is a flow chart of fast method for deploying resource according to a preferred embodiment of the present invention.

### Detailed Description of the Preferred Embodiment

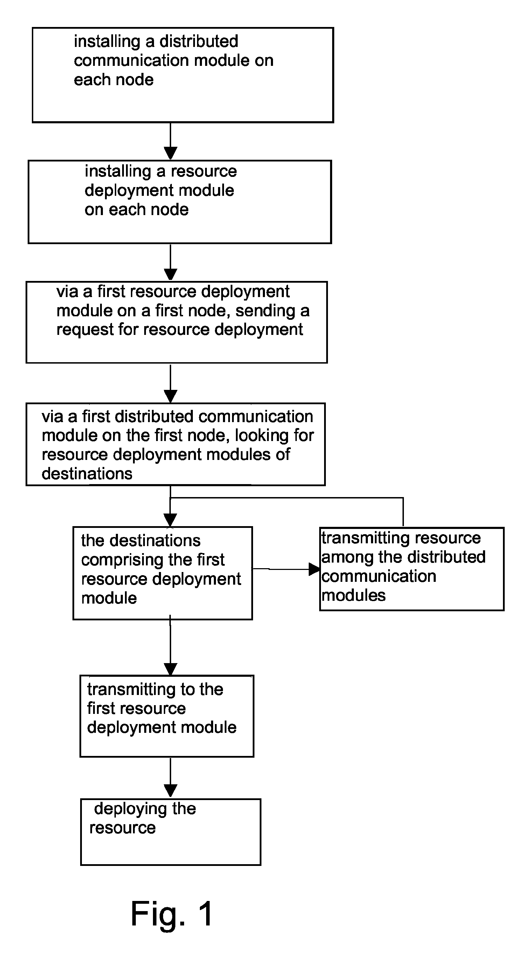

Referring to Fig. 1 of the drawings, according to a preferred embodiment of the present invention, a fast method for deploying resource in a cloud computing environment comprises steps of:
step 1: installing a distributed communication module and a resource deployment module on each one of a plurality of nodes;
step 2: via a first resource deployment module on a first node of the plurality of nodes, sending a request for resource deployment to other nodes by a user;
step 3: when a first distributed communication module on the first node detects a destination that comprises the first resource deployment module, sending the request to the first resource deployment module on the first node by the first distributed communication module; continually transmitting resource among the distributed communication modules when other destinations are detected;
step 4: deploying the resource by the first resource deployment module;
step 5: terminating deploying the resource.

Preferably, each distributed communication module is capable of serving as not only a server terminal but also a client terminal; and the first distributed communication module on the first node is connected with a distributed communication module on a closest node. In order to establish a distributed communication environment among N nodes, at least N-1 connections are required for communicating with each other, which is similar to N points on a straight line. Of course, more connections can be established, and a number of the connections is determined according to specific deployment circumstance.

Preferably, the first resource deployment module reads a name on a corresponding configuration file and registers the name to the corresponding first distributed communication module, then the first distributed communication module updates a routing table; wherein each resource deployment module has a different name, so as to uniquely represent the resource deployment modules on different nodes.

The transmitting resource among the distributed communication modules comprises steps of:
step I: sending the request for resource deployment by the resource deployment module on any one of the nodes to the distributed communication module on the same node;
step II: looking up a routing table by the distributed communication module of step I; if the distributed communication module finds that a receiver comprises the resource deployment module of step I, carry out step III, otherwise carry out step IV;
step III: transmitting a resource to the resource deployment module of step I by the distributed communication module on the same node; deleting a name of the resource deployment module of step I by the destination of the request for the resource deployment; and deploying the resource by the resource deployment module of step I; and
step IV: if the request for the resource deployment has other destinations, looking up the routing table of the receiver by the distributed communication module of step I to obtain connections to a next distributed communication module, and sending the request for the resource deployment to the next distributed communication module.

The step of updating the routing table specifically comprises steps of:
step A: receiving a registering request from the first resource deployment module serving as a client terminal by the first distributed communication module, obtaining the name registered, and setting a communication distance to be 1;
step B: if a next distributed communication module exists, informing the next distributed communication module;
step C: receiving a registering notification from a new client terminal by the next distributed communication module, adding 1 to the communication distance; judging whether the registered name exists, if no, carry out step D; if yes, carry out step E;
step D: directly carrying out the step B according to the name of the client terminal newly added to the routing table, records of connections of the previous distributed communication module and communication distances;
step E: if the registered name exists, comparing the previous communication distance with a current communication distance; if the current communication distance is shorter, carry out a step F, otherwise carry out the step B;
step F: updating a connection of the distributed communication module corresponding to the name of the client terminal recorded in the routing table as the previous distributed communication module and a latest communication distance.

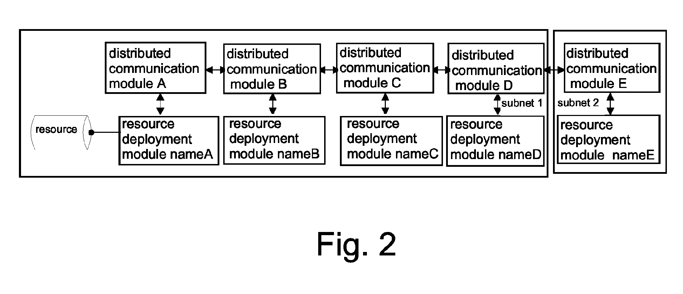

Fig. 2 shows a specific preferred embodiment of the present invention. In Fig. 2, a method for establishing a distributed platform comprises steps of:
(1) providing five nodes A, B, C, D and E of four servers; wherein the nodes A, B, C and D are on a first subnet 192.168.6.XXX and the node E is on a second subnet 192.168.10.XXX;
(2) establishing four connections of A∼B, B∼C, C∼D and D∼E among distributed communication modules, in such a manner that the node E and E are capable of accessing each other by setting of a router;
(3) starting a resource deployment module to read a name of a configuration file, registering the name of the configuration file to the distributed communication module;
(4) re-establishing the connections of B∼C and C∼D if an IP of the node C changes;
(5) sending a request for deploying resource via a resource deployment module nameA on the node A, wherein a list of destinations is resource deployment module nameB, resource deployment module nameC, resource deployment module nameD and resource deployment module nameE;
(6) judging that whether the list of the destinations comprises a name of the resource deployment module nameA by the distributed communication module A; if no, looking up a routing table by the distributed communication module A for seeking a next distributed communication module B, and sending the request for resource deployment to the distributed communication module B;
(7) judging that whether the list of the destinations comprises a name of the resource deployment module on the node nameB by the distributed communication module B;
   if yes, sending the request for deploying resource to the resource deployment module nameB, automatically deploying the resource by the local resource deployment module on the node B, wherein the nameB is deleted from the list of the destinations, and a list of remaining destinations is nameC, nameD and nameE;
   since the current list is not empty, seeking a next distributed communication module C and sending the request for deploying resource to the distributed communication module C;
(8) judging that whether the list of the destinations comprises the name of the resource deployment module nameC by the distributed communication module C;
   if yes, sending the request for deploying resource to the resource deployment module nameC, automatically deploying the resource by the resource deployment module nameC, wherein the nameC is deleted from the list of the destinations, and a list of remaining destinations is nameD and nameE;
   since the current list is not empty, seeking a next distributed communication module D and sending the request for deploying resource to the distributed communication module D;
(9) judging that whether the list of the destinations comprises the name of the resource deployment module nameD by the distributed communication module D;
   if yes, sending the request for deploying resource to the resource deployment module nameD, automatically deploying the resource by the resource deployment module nameD, wherein the nameD is deleted from the list of the destinations, and a list of remaining destination is nameE;
   since the current list is not empty, seeking a next distributed communication module E and sending the request for deploying resource to the distributed communication module E;
(10) judging that whether the list of the destinations comprises the name of the resource deployment module nameE by the distributed communication module E;
   if yes, sending the request for deploying resource to the resource deployment module nameE, automatically deploying the resource by the resource deployment module nameE, wherein the nameE is deleted from the list of the destinations; terminating deploying resource, because the current list is empty.

Due to the simple connections, the simple setting of the router, convenient management and cross-platforms and etc., the deployment of the present invention is very fast. While deploying the resource from the nameC to nodes on both sides thereof, the advantages are more apparent.

## Claims

1. A method for deploying resource in a cloud computing environment, comprising steps of:
step 1: installing a distributed communication module and a resource deployment module on each one of a plurality of nodes;
step 2: via a first resource deployment module on a first node of the plurality of nodes, sending a request for resource deployment to other nodes by a user;
step 3: when a first distributed communication module on the first node detects a destination that comprises the first resource deployment module, sending the request to the first resource deployment module on the first node by the first distributed communication module; continually transmitting resource among the distributed communication modules when other destinations are detected;
step 4: deploying the resource by the first resource deployment module;
step 5: terminating deploying the resource.

2. A method for deploying resource as claimed in claim 1, wherein each distributed communication module is capable of serving as not only a server terminal but also a client terminal; and the first distributed communication module on the first node is connected with a distributed communication module on a closest node.

3. A method for deploying resource as claimed in claim 1, wherein the first resource deployment module reads a name on a corresponding configuration file and registers the name to the corresponding first distributed communication module, then the first distributed communication module updates a routing table; wherein each resource deployment module has a different name, so as to uniquely represent the resource deployment modules on different nodes.

4. A method for deploying resource as claimed in claim 2, wherein the first resource deployment module reads a name on a corresponding configuration file and registers the name to the corresponding first distributed communication module, then the first distributed communication module updates a routing table; wherein each resource deployment module has a different name, so as to uniquely represent the resource deployment modules on different nodes.

5. A method for deploying resource as claimed in any one of claims 1-4, wherein the transmitting resource among the distributed communication modules comprises steps of:
step I: sending the request for resource deployment by the resource deployment module on any one of the nodes to the distributed communication module on the same node;
step II: looking up a routing table by the distributed communication module of step I; if the distributed communication module finds that a receiver comprises the resource deployment module of step I, carry out step III, otherwise carry out step IV;
step III: transmitting a resource to the resource deployment module of step I by the distributed communication module of step I; deleting a name of the resource deployment module of step I by a destination of the request for the resource deployment; and deploying the resource by the resource deployment module of step I; and
step IV: if the request for the resource deployment has other destinations, looking up the routing table of the receiver by the distributed communication module of step I to obtain connections to a next distributed communication module, and sending the request for the resource deployment to the next distributed communication module.

6. A method for deploying resource as claimed in claim 3 or 4, wherein updating the routing table comprises steps of:
step A: receiving a registering request from the first resource deployment module serving as a client terminal by the first distributed communication module, obtaining the name registered, and setting a communication distance to be 1;
step B: if a next distributed communication module exists, informing the next distributed communication module;
step C: receiving a registering notification from a new client terminal by the next distributed communication module, adding 1 to the communication distance; judging whether the registered name exists, if no, carry out step D; if yes, carry out step E;
step D: directly carrying out the step B according to the name of the client terminal newly added to the routing table, records of connections of the previous distributed communication module and communication distances;
step E: if the registered name exists, comparing the previous communication distance with a current communication distance; if the current communication distance is shorter, carry out a step F, otherwise carry out the step B;
step F: updating a connection of the distributed communication module corresponding to the name of the client terminal recorded in the routing table as the previous distributed communication module and a latest communication distance.

7. A method for deploying resource as claimed in claim 5, wherein updating the routing table comprises steps of:
step a: receiving a registering request from the first resource deployment module serving as a client terminal by the first distributed communication module, obtaining the name registered, and setting a communication distance to be 1;
step b: if a next distributed communication module exists, informing the next distributed communication module;
step c: receiving a registering notification from a new client terminal by the next distributed communication module, adding 1 to the communication distance; judging whether the registered name exists, if no, carry out step d; if yes, carry out step e;
step d: directly carrying out the step b according to the name of the client terminal newly added to the routing table, records of connections of the previous distributed communication module and communication distances;
step e: if the registered name exists, comparing the previous communication distance with a current communication distance; if the current communication distance is shorter, carry out a step F, otherwise carry out the step b;
step f: updating a connection of the distributed communication module corresponding to the name of the client terminal recorded on the routing table as the previous distributed communication module and a latest communication distance.
